# EUROPEAN PATENT SPECIFICATION

(11) **EP 2 488 423 B1**
(45) Date of publication and mention of the grant of the patent: **30.03.2016**
(21) Application number: 10774149.8
(22) Date of filing: 13.10.2010
(51) Int. Cl.: B65D 75/58, B32B 7/12, B32B 15/08, B32B 27/32, B32B 27/34, B32B 27/36, C09D 17/00

(54) **POUCH CONTAINING A PAINT COLOURANT COMPOSITION**
BEUTEL BEINHALTEND EINE FARBSTOFFZUSAMMENSETZUNG
SACHET CONTENANT UNE COMPOSITION DE COLORANT

(30) Priority: 16.10.2009 NL 1037405
(43) Date of publication of application: 22.08.2012
(73) Proprietor: PPG Europe B.V., 1422 AD Uithoorn (NL)
(72) Inventor: AKKERMAN, Matthias Anthonie Johannes, NL-3602 PH Maarssen (NL); BORMANS, Niels Ward, NL-1401 CW Bussum (NL)
(74) Representative: Bounaga, Sakina
(86) International application number: PCT/EP2010/065298
(87) International publication number: WO 2011/045329

(56) References cited:
- EP-A1- 1 449 784
- EP-A1- 1 629 974
- EP-A1- 1 894 851
- EP-A1- 1 914 175
- JP-A- 2002 104 453
- US-A- 5 935 659
- US-A1- 2006 207 476
- US-A1- 2008 148 995

## Description

### FIELD OF THE INVENTION

The present invention relates to a pouch for packaging a paint colourant and to the use thereof. This invention is particularly advantageous for the colouring of paints.

### BACKGROUND OF THE INVENTION

Devices for mixing paints to a colour of the client's choosing are well-known. In principle they are based on dispensing a paint colourant into a container of a base paint to obtain paint of the desired colour. Typically metal cans are used as packaging for the paint colourant compositions. This type of packaging is very sturdy and robust. A disadvantage of this packaging is that upon collection of empty packaging a lot of space is required. A further disadvantage is that this type of packaging is difficult to empty completely. Furthermore, emptying is time consuming and often a messy job. In addition, metal based canisters have become more expensive with rising raw material prices and energy costs.

Recent developments in packaging developments have led to the use of flexible packaging for a range of products. This type of packaging is mostly for single use only. Once opened, it can not be reclosed in a manner as to preserve the content for a longer period of time. The content is typically dispensed from the recipient all at once. Flexible packaging is not suitable for solvent based compositions such as solvent-based paint colourant compositions. Several solvents are aggressive to flexible packaging made of multi-layered film. Delamination and loss of seal integrity may result.

Flexible packaging for a paint colourant requires good barrier properties so that the content can be stored practically unchanged for a long period of time, typically two years. In a multi-layered film, barrier properties are typically provided using certain types of laminates, especially polyamide or aluminium foil. To reduce packaging costs the aluminium foil should be as thin as possible. The disadvantage of aluminium foil is its sensitivity to repeated flexing of the packaging. This leads to cracking of the foil and loss of barrier properties. This may lead to quality losses of the paint colourant composition.

Use of flexible packaging in a paint dispenser was previously found unsuitable. During transport or in use, flexible packaging leaked or lost its barrier properties. Especially when the flexible packaging was used for repeated dispensing of doses of paint colourant, the packaging was not resistant to repeated flexing and/or pressure applied on the flexible packaging.

There is a continued need for replacement of paint colourant cans in a paint dispenser with environmentally friendly and robust packaging solutions. Therefore the present invention aims to provide a solution to at least part of the problems described above. It aims to provide a flexible packaging solution for the containment of paint colourant. The invention aims to provide a flexible packaging for paint colourant that provides adequate packaging integrity and storage stability. In particular, it aims to provide a flexible packaging that is resistant to cracking. The invention further aims to provide use of such packaging in a paint dispensing device.

EP 1 449 784 A1 discloses a pouch for containing beverages, foods, seasonings, pharmaceuticals, cosmetics, detergents, etc. The pouch comprises a body formed of a laminated sheet comprising at least three layers including biaxially oriented PET (outer layer) / aluminum foil (intermediate layer) / biaxially oriented nylon (intermediate layer) / LLDPE (inner layer). An adhesive layer is interposed between adjacent layers of such a multilayered film. The pouch comprises a spout made of thermoplastic resins, the spout comprising a sealing surface adopted to be sealed to the polyethylene sealing layer of the laminated sheet.

US 2006/0207476 A1 discloses solvent based paint colourant compositions comprising for example alcohol ethoxylates, alkylaryl polyglycol ethers or similar surfactants. In a specific embodiment the colorant compositions are provided in sealed pouches wherein the colorant composition can be readily dispensed in controlled amounts, the pouches allowing for the use of the colorant composition with a minimum of waste.

### SUMMARY OF THE INVENTION

The present invention relates to a pouch for the containment of a paint colourant composition and the use thereof. Specifically the present invention provides a pouch as defined in the claims. The pouch is adapted to resist flex cracking making it particularly suitable as packaging for a paint colourant composition.

In particular, the present invention provides a pouch comprising a body formed of a laminated sheet comprising at least three layers, said pouch containing a paint colourant composition, wherein said composition comprises a non-aqueous solvent,
said laminated sheet comprising:
1) a polyethylene sealing layer,
2) an oriented polyamide layer, bonded to said polyethylene sealing layer by means of an adhesive,
3) optionally a barrier layer of aluminium , bonded to said oriented polyamide layer by means of an adhesive,
4) a polyethylene terephthalate layer bonded to said barrier layer of aluminium if present, or to said oriented polyamide layer, by means of an adhesive;
optionally an ink layer provided between said polyethylene terephthalate layer and said barrier layer of aluminium;
and a spout; said spout comprising sealing surfaces adopted to be sealed to said polyethylene sealing layer, of said laminated sheet to form a spouted pouch for the containment of said paint colourant composition,
said sealing surfaces comprising high density polyethylene (HDPE) and/or said adhesive being a polyurethane adhesive. In an embodiment, said HDPE has a density of at least 945 kg/m³.

According to an embodiment, said oriented polyamide layer bonded to said polyethylene sealing layer has a bond strength of at least 2.5 N/15 mm, and said barrier layer of aluminium bonded to said oriented polyamide layer has a bond strength of at least at least 3.0 N/15mm, and said polyethylene terephthalate layer bonded to said barrier layer of aluminium has a bond strength of at least at least 4.0 N/15mm.

In an embodiment, the thickness of said polyethylene sealing layer is between 90 to 160 µm, the thickness of said oriented polyamide layer is between 10 to 20 µm, the thickness of said barrier layer of aluminium is between 8 to 10 µm, and the thickness of said polyethylene terephthalate layer is between 10 to 14 µm.

According to an embodiment of the invention, said spout is provided with an opening allowing at least 95% by weight of said paint colourant composition to be removed from said pouch in a time frame of at most 3 minutes.

In an embodiment, said pouch is provided with a gusset and said gusset is provided with fortification means and/or suspension means.

In an embodiment, said paint colourant composition comprises at least 4% by weight, preferably least 10% by weight, preferably at least 20% by weight of a colourant component. In an embodiment, said paint colourant composition comprises a compound selected from the group consisting of an oxime, an ethoxylated alkyl alcohol and alkyl polyglycol ether phosphate. In an embodiment, said paint colourant composition comprises between 10% and 40% by weight naphtha, preferably between 10% and 30%by weight, most preferably between 12 and 25% by weight naphtha.

In another aspect the present invention relates to the use of a pouch according to the invention as packaging for a paint colourant composition comprising a non-aqueous solvent. In an embodiment, the present invention provides the use of a pouch according to the invention as packaging for a paint colourant composition, wherein said paint colourant composition comprises at least 4% by weight, preferably at least 10% by weight, preferably at least 20% by weight of a colourant component. In an embodiment, said paint colourant composition comprises a compound selected from the group consisting of an oxime, an ethoxylated alkyl alcohol and alkyl polyglycol ether phosphate. In an embodiment, said paint colourant composition comprises between 10% and 40% by weight naphtha, preferably between 10% and 30% by weight, most preferably between 12 and 25% by weight naphtha.

The invention is particularly targeting uses in applications wherein flexible packaging is repeatedly flexed or pressurized.

These and further aspects and embodiments of the invention are further explained in the following sections and in the claims, as well as illustrated by non-limiting examples.

### BRIEF DESCRIPTION OF THE FIGURES

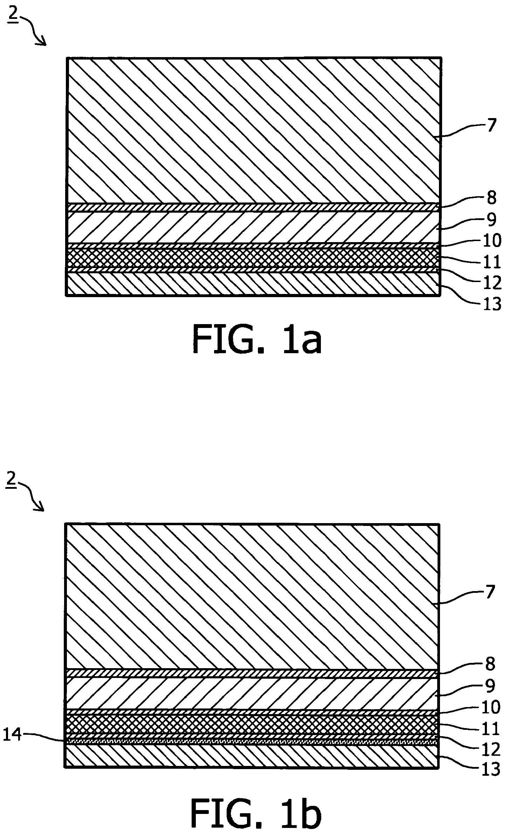

**Figure 1 a-b** schematically illustrates the composition of a laminated sheet material according to an embodiment of the invention. The laminate may be unprinted (Figure 1 a) or printed (Figure 1 b). The laminated sheet material comprises a co-extruded polyethylene sealing layer (7), a first adhesive layer (8) bonding said co-extruded polyethylene sealing layer to an oriented polyamide layer (9), a second adhesive layer (10) bonding said polyamide layer to a barrier layer of aluminium foil (11), and a third adhesive layer (12) bonding said barrier layer to a polyethylene terephthalate layer (13).

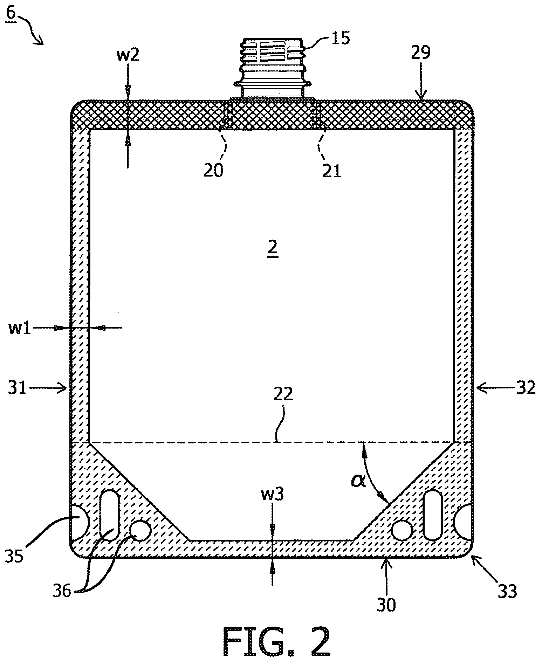

**Figure 2** schematically illustrates a spouted pouch according to an embodiment of the invention.

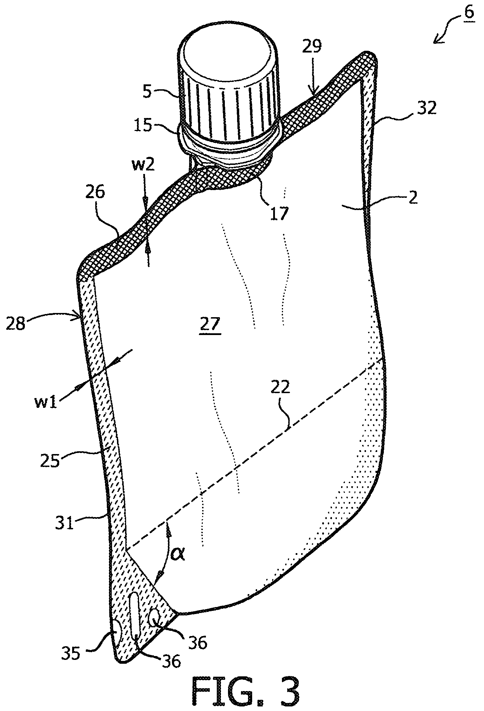

**Figure 3** schematically illustrates a spouted stand-up pouch (6) according to an embodiment of the invention. The spout is provided with a re-closable cap (5), a gusset (22), fortification means (35) and suspension means (36).

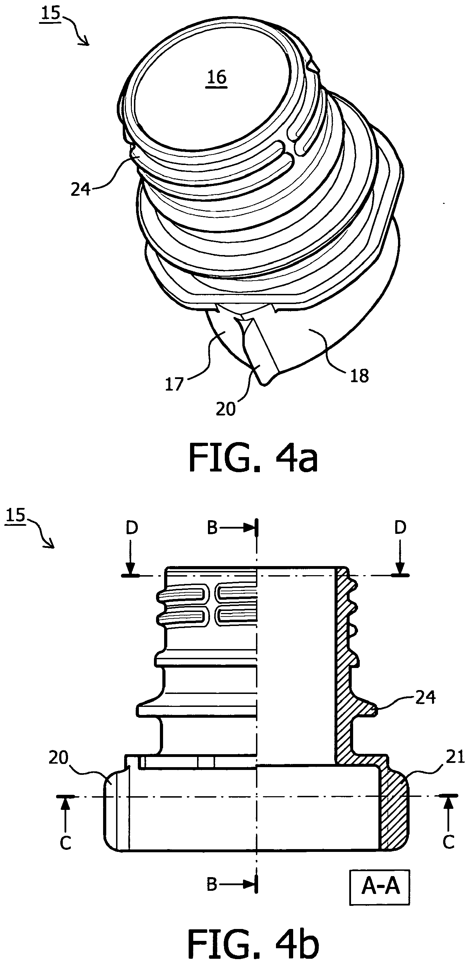

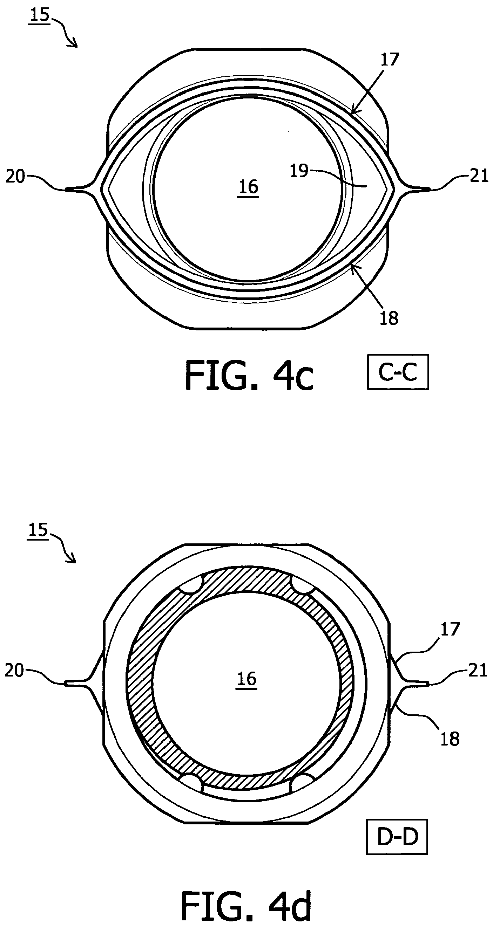

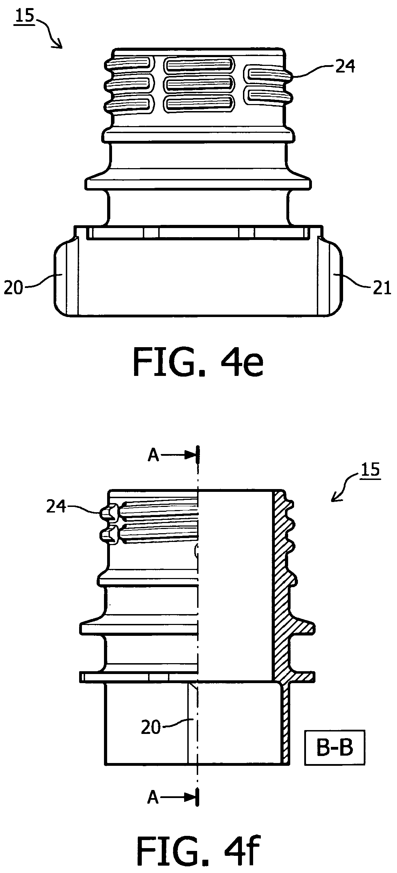

**Figure 4 a-f** schematically illustrates a spout suitable for providing a spouted pouch (6) according to an embodiment of the invention. The plastic body of the spout has sealing surfaces (17, 18) on opposed sides sealable to the polyethylene sealing layer of the laminated sheet material of the pouch. Said body is arch-shaped on opposing sides of the body and is provided with elongated wings (20, 21).The dispensing means (34) on the spout are provided with a screw-thread (24) designed to mate with a compatible screw-thread on a (non-displayed) cap (5).

### DETAILED DESCRIPTION OF THE INVENTION

Before the present method and devices used in the invention are described, it is to be understood that this invention is not limited to particular methods, components, or devices described, as such methods, components, and devices may, of course, vary. It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

The terms "comprising", "comprises" and "comprised of" also include the term "consisting of".

The recitation of numerical ranges by endpoints includes all numbers and fractions subsumed within the respective ranges, as well as the recited endpoints.

The term "about" as used herein when referring to a measurable value such as a parameter, an amount, a temporal duration, and the like, is meant to encompass variations of +/-10% or less, preferably +/-5% or less, more preferably +/-1 % or less, and still more preferably +/-0.1 % or less of and from the specified value, insofar such variations are appropriate to perform in the disclosed invention. It is to be understood that the value to which the modifier "about" refers is itself also specifically, and preferably, disclosed.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention.

The present invention is directed to an improved flexible packaging and uses thereof. The present invention is particularly directed to packaging for the containment of a paint colourant composition and for use in a paint dispensing device.

The improvements to the flexible packaging are such that a flexible packaging obtained an increased resistance against environmental stresses caused by repeated flexing of the packaging and/or by attack from the contents of the packaging, in particular the paint colourant composition. This makes packaging according to an embodiment of the invention particularly suitable for the replacement of metal cans.

By the term "flexible packaging" it is meant a packaging made of easily yielding materials such as film, foil, or paper sheeting which, when filled and sealed, acquire pliable shape. Typical examples of flexible packaging are bags, envelopes, pouches, sachets, wraps, etc. In the present invention, the term flexible packaging typically relates to packaging made of multi-layered sheet material, such as for instance a pouch.

According to the invention, the flexible packaging is a pouch. By the term "pouch" it is meant a receptacle shaped like or resembling a bag or pocket. In the packaging industry and in this invention, it particularly relates to a sealed plastic or foil container made of a flexible sheet that can be bonded together along its seams to form a closed recipient. A pouch is an advantageous packaging form as it can be formed and filled on the same manufacturing line.

A pouch may be formed and/or filled using conventionally known manufacturing techniques, such as a horizontal form-fill-seal machine with a single or multiple lanes, a flat bed pre-made pouch machine, a horizontal or vertical form-fill machine, or the like.

A pouch may comprise a dispensing means which allows for easier emptying of said pouch. Particularly applicable to the current invention is a spout.

The present invention particularly relates to a spouted pouch comprising a multi-layered sheet, said sheet comprising a sealing layer, a barrier layer and a printable layer. By the term "multi-layered sheet" it is meant a sheet comprising a multiple of layers. The terms multi-layered sheet, laminated sheet, laminated sheet material or laminate may be used interchangeably.

In a preferred embodiment of the invention, said multi-layered sheet comprises a polyester, aluminium, polyamide and polyethylene laminate.

In a more preferred embodiment of the invention, said multi-layered sheet comprises a polyethylene terephthalate layer, a barrier layer of aluminium foil, polyamide and polyethylene laminate. This sheet structure is advantageous for protecting the aluminium foil against cracking caused by repeated flexing of the foil and/or by the paint colourant composition and/or by pressure exerted on the packaging during use. Loss of barrier properties is prevented.

In particular, in a first aspect the present invention provides a pouch (6) comprising a laminated sheet
of at least three layers, for the containment of a paint colourant composition,
said laminated sheet comprising:
1) a polyethylene sealing layer (7),
2) an oriented polyamide layer (9), bonded to said sealing layer (7) by means of an adhesive, optionally
3) a barrier layer of aluminium (11), bonded to said oriented polyamide layer by means of an adhesive,
4) a polyethylene terephthalate layer (13) bonded to said barrier layer of aluminium if present, or to said oriented polyamide layer (9), by means of an adhesive;
   optionally an ink layer (14) provided between said polyethylene terephthalate layer and said barrier layer of aluminium; and
a spout (15);
said spout comprising sealing surfaces adopted to be sealed to said sealing layer of said laminated sheet to form a spouted pouch for the containment of said paint colourant composition,
said sealing surfaces comprising high density polyethylene (HDPE) and/or said adhesive being a polyurethane adhesive.

In a preferred embodiment, the present invention provides a pouch (6) comprising a laminated sheet
of at least four layers, for the containment of a paint colourant composition,
said laminated sheet comprising:
1) a polyethylene sealing layer (7),
2) an oriented polyamide layer (9), bonded to said sealing layer (7) by means of an adhesive,
3) a barrier layer of aluminium (11), bonded to said oriented polyamide layer by means of an adhesive,
4) a polyethylene terephthalate layer (13) bonded to said barrier layer of aluminium by means of an adhesive;
optionally an ink layer (14) provided between said polyethylene terephthalate layer and said barrier layer of aluminium; and
a spout (15);
said spout comprising sealing surfaces adopted to be sealed to said sealing layer of said laminated sheet to form a spouted pouch for the containment of said paint colourant composition,
said sealing surfaces comprising high density polyethylene (HDPE) and/or said adhesive being a polyurethane adhesive.

In a preferred embodiment of the invention, the sealing surfaces adopted to be sealed to the sealing layer of the spout as described above, comprises a high density polyethylene with a density of at least 945 kg/m³.

In a preferred embodiment of the invention said high density polyethylene is a polyethylene copolymer with a density of at least 945 kg/m³. In a preferred embodiment of the invention said high density polyethylene is a polyethylene copolymer with a density of at least 945 kg/m³ and a flexural modulus of around 900 MPa, as measured according to ISO 78-1997. Spouts with such a flexural modulus are more resistant to cracking, such as caused by cold temperatures during transport of a pouch. In a more preferred embodiment of the invention, the sealing surfaces on the spout comprise a polyethylene copolymer with a density of at least 945 kg/m³, a flexural modulus of around 900 MPa and hardness (shore D) of around 64, as measured according to ISO 868-1978. A spout with such a value for hardness is soft. This improves spout weld quality. Seal strength is improved.

In a preferred embodiment of the invention the polyethylene sealing layer of the above described pouch is a co-extruded polyethylene sealable to a polyethylene copolymer with a density of at least 945 kg/m³.

Pouches according to an embodiment of the invention have an improved resistance against flex cracking. The inventors found that flexible pouches could serve as packaging for paint colourant provided they were adapted to resist flex cracking. They realized that flex cracking was probably the limiting mode of failure for pouches serving as a receptacle for paint colourant compositions.

By the term "flex cracking" is meant a material failure resulting from repeated flexing of the material. Certain mechanical and environmental factors may cause materials, e.g. flexible packaging, to exhibit failure. For instance, repeated flexing of a material may induce material weaknesses leading to subsequent loss of packaging integrity. Material weakness may include cracking of a barrier layer, cracking of seals or caps, delamination. Flex cracking may also be caused by the movement of the liquid within the pouch. This is most likely to happen where a film is in close proximity to the upper surface of the liquid.

Flex cracking can occur during shipping and handling of even small fluid-containing pouches. By the term "loss of packaging integrity" it is meant a degradation of seal strength, bonding strength, impact strength or barrier properties of a flexible packaging. Flex crack pinholes result in at least loss of oxygen and moisture barrier, reducing the shelf life potential of the product, and often in loss of the hermetic seal, rendering the product unfit for use. In addition, flexible pouches are easier to open than metal cans. Flexible packaging provided with re-closable means for dispensing, are easier to pour colourant composition with than with metal cans. Spilling of colourant composition is reduced.

The present invention particularly relates to a spouted pouch comprising a multi-layered sheet, said sheet comprising a sealing layer, a barrier layer and a printable layer, wherein said sealing layer comprises polyethylene, preferably co-extruded polyethylene.

The present invention particularly relates to a pouch comprising a multi-layered sheet, said sheet comprising a sealing layer, a barrier layer and a printable layer, wherein said barrier layer is a metal sheet, particularly an aluminium foil. In a preferred embodiment of the invention, said aluminium is in the form of an aluminium foil. An aluminium foil is capable of providing moisture and oxygen barrier properties to said recipient. In a preferred embodiment of the invention, said aluminium foil comprises a layer with a thickness of between 5 and 15 µm, preferably of between 5 and 10 µm, preferably of around 8 µm or around 9 µm.

By the term "sealing layer" it is meant a layer for adhering adjacent thermoplastic films together to form a package. The resistance of the seal layer rupturing being about 1 to 12 N/15 mm as measured according to ASTM D882. The seal layer being formed from a thermoplastic polymer comprising polymers of ethylene.

It is known that film made from a lower density polyethylene will have better flex crack resistance than film made from a higher density polyethylene (WO 95/26268). However, a film made from a lower density polyethylene will have inferior thermal resistance and stiffness than film made from a higher density polyethylene. Film with inadequate thermal resistance may stretch and deform unacceptably in close proximity to heated machine parts such as sealing jaws found in form, fill and seal machines for making pouches. The stretched or deformed area of the film may become the weak point of the pouch, at which it will fail prematurely in subsequent shipping and handling. It may also cause the spout to detach from the laminated sheet.

In an embodiment of the invention, said sealing layer is a polyethylene sealing layer, preferably a co-extruded polyethylene sealing layer. In a preferred embodiment of the invention a pouch is provided as described above, wherein the thickness of the polyethylene sealing layer is between 90 to 160 µm, preferably of around 100 or around 150 µm.

In a preferred embodiment of the invention, a pouch is provided as described above wherein said oriented polyamide layer (9) bonded to said sealing layer (7) has a bond strength of at least 2.5 N/15 mm, and said barrier layer of aluminium (11) bonded to said oriented polyamide layer has a bond strength of at least at least 3.0 N/15mm, and said polyethylene terephthalate layer (13) bonded to said barrier layer of aluminium has a bond strength of at least at least 4.0 N/15mm.

Especially suitable for obtaining a pouch with bond strengths as described above is a polyurethane adhesive, preferably a two component polyurethane adhesive, preferably a two component polyurethane adhesive, wherein said adhesive has a residual solvent level of preferably lower than 20 g/m², more preferably lower than 15 g/m², most preferably lower than 10 g/m². Adhesives with low residual solvent content when cured provide less migration of ingredients of the adhesive composition to the paint colouring composition. This is advantageous to obtain an improved storage stability of the paint colouring composition. Use of a polyurethane adhesive reduced the occurrence of delamination of the laminate layers.

By the term "printable layer" it is meant a layer which may be provided with a layer of print, which is printable. In a preferred embodiment of the invention, said printable layer is a polyethylene terephthalate layer. Polyethylene terephthalate (PET, polyester) provides a stable underground for print. The print is preferably applied to the surface of the polyethylene terephthalate layer facing the third adhesive layer. In that way, the print layer is covered by an outer layer. Hence it is protected and not easily removable. Scratching of the outer surface of the pouch will not remove print. The print is obtained by applying ink. The terms print layer, layer of print and ink layer may be used interchangeably.

In a preferred embodiment of the invention, said polyethylene terephthalate layer has a thickness of between 10 and 20 µm, preferably of between 10 and 18 µm, more preferably of between 10 and 16 µm, most preferably of about 12 µm.

In a more preferred embodiment of the invention a pouch is provided as described above, wherein the thickness of the polyethylene sealing layer is between 90 to 160 µm, the thickness of the oriented polyamide layer is between 10 to 20 µm, the thickness of the barrier layer of aluminium foil is between 7 to 10 µm, and the thickness of the polyethylene terephthalate layer is between 10 to 14 µm. This structure is advantageous for protection of the adhesive layers to damage by the content of the pouch, in particular by the paint colourant composition, especially by flex cracking agents. The total thickness of this structure is advantageous for providing the pouch a minimum level of bending stiffness, making it less sensitive to flex cracking.

In a preferred embodiment of the invention, said adhesive layer is provided by a polyurethane adhesive, preferably a two component polyurethane adhesive. By the term "two component polyurethane adhesive" it is meant a polyurethane adhesive that requires bringing together two components to obtain the actual adhesive. The components are typically brought together and mixed just prior before application of an adhesive layer in the production of a laminated foil. Two component polyurethanes are examples of thermosetting materials, which are defined as materials which, when cured by application of heat or chemical means, change into a substantially infusible and insoluble product (The Epoxy Resins Formulators Training Manual, 1984). A urethane is a material that results from the reaction between an isocyanate molecule and a molecule containing a hydrogen source, usually a hydroxyl group. Two component polyurethane adhesives and sealants are polymer products based on this reaction where one component or side contains the multifunctional isocyanate and the other component or side contains the polyol. The two components must then be mixed at fixed ratios and cured to obtain the final material. Typically two part polyurethane sealants and adhesives are 100% solids. Polyurethane adhesives provide improved resistance to the laminate against solvents and ingredients of the paint colouring composition. Polyurethane adhesives prevented laminates from delaminating.

Methods for determining the tendency of flexible packaging to loose their packaging integrity are well known in the art. They include methods such as the determination of tensile load, seal strength, bond strength and tests such as the inflation test; plate burst test, drop test and leaker test.

The inventors found that a flexible pouch as described above was particularly suitable, when it remained leakage free when kept at a negative pressure of at least 0.25 bar for 30 seconds. In a preferred embodiment of the invention a pouch is provided as described above, wherein said pouch remains leakage free when kept at a negative pressure of at least 0.25 bar for 30 seconds, more preferably at least 0.30 bar for 30 seconds.

The inventors found that a flexible pouch as described above was particularly suitable, when it showed no leakage when pressurized between two rigid plates and submitted to a burst pressure preferably of at least 0.4 bar, as measured in a plate burst test. In a preferred embodiment of the invention a pouch is provided as described above wherein said pouch shows no leakage when pressurized between two rigid plates and submitted to a burst pressure preferably of at least 0.4 bar, more preferably of at least 0.5 bar, most preferably of at least 0.7 bar. In a more preferred embodiment of the invention a pouch is provided as described above wherein said pouch shows no leakage when pressurized between two rigid plates and submitted to a burst pressure preferably of at least 0.4 bar, more preferably of at least 0.5 bar, most preferably of at least 0.7 bar, as measured according to ANSI F1140-00. In a most preferred embodiment of the invention a pouch is provided as described above wherein said pouch shows no leakage when pressurized between two rigid plates and submitted to a burst pressure preferably of at least 0.7 bar, as measured according to ANSI F1140-00. A flexible pouch with the above described burst pressure resistance is particularly advantageous for use in a paint dispenser wherein emptying of a flexible packaging is based on the application of a pressure, for instance by means of a plate, on a side wall of the pouch.

Furthermore, a flexible pouch proved suitable as packaging for a paint colourant composition, especially for a paint colourant composition as described above, provided the pouch was provided with seals that withstood a tensile strength of at least 45 N/15mm. In a preferred embodiment of the invention a pouch is provided as described above, wherein said pouch is provided with seals that withstand a tensile strength of at least 45 N/15mm. In a preferred embodiment of the invention a pouch is provided as described above, wherein said pouch is provided with seals that withstand a tensile strength of at least 45 N/15mm, as measured according to ANSI 88-00.

In a preferred embodiment of the invention a pouch is provided as described above, wherein said spout is provided with a cap removably connected to said spout. A spout and cap are particularly useful for providing a flexible pouch with means for repeated opening and closing. Access is provided to the content of the pouch, so it may be dispensed and added to a base formulation for obtaining a coloured paint. Use of a spout and cap as opening means allow the pouch to be opened and reclosed in a straight forward fashion, far easier than metal cans. The mouth of the spout provides a means for pouring of the colourant composition. The colourant composition can be easily dispensed. The colourant composition can be removed essentially completely. Spilling of colourant composition is reduced. The amount of manual labour otherwise required to clean metal cans and remove remaining colourant so as to prevent unused colourant entering into the waste stream, is reduced.

Flexible pouches according to an embodiment of the invention may be emptied more completely than paint colourant canisters. In a preferred embodiment, over 95% of the weight of the paint colouring composition may be removed from the opened pouch, merely by removing the closure means, turning the pouch upside down so that the opening faces a storage recipient in a paint dispenser and emptying the pouch by a gravitational force. Pouches according to an embodiment of the invention provide more comfort. They are easy to use, easy to open/close, easy to pour without spilling, easy to empty quickly and fully. The environmental impact of cans may be reduced.

In a preferred embodiment a pouch is provided wherein said spout is provided with an opening (16) allowing at least 95%, preferably at least 96%, more preferably at least 97%, most preferably at least 98% by weight of said paint colourant composition to be removed from said pouch in a time frame of at most 3 minutes, preferably 2 minutes, most preferably 60 seconds. This is advantageous for fast and substantially complete removal of the paint colourant composition from the packaging.

By the term "paint colourant composition" it is meant a composition capable of providing a colour or tint to a white or tintable base for the manufacture of a paint. The present invention particularly relates to a paint colourant composition comprising at least 20% of a colourant component.

By the term "colourant component" it is meant a pigment, colourant, dye, tinting agent, metal effect agent, etc. By the term "pigment" it is meant a substance that imparts colour to another substance or mixture. A pigment may be provided in the form of organic or inorganic dry powder. By the term "colourant" it is also meant a substance that imparts colour to another substance or mixture. A colourant generally includes at least one pigment and other additives. "Dyes" and "tinting agents" similarly are colour-imparting agents. By "metal effect agent" an agent is meant that imparts metallic-type luster and associated properties to paint films. Hereinafter, unless otherwise noted, pigment, colourant, tinting agent, dye and metal effect agent will be referred to collectively as "colourant component".

A paint colourant composition of the present invention typically comprises a solvent and a colourant component. A paint colourant composition of the present invention is solvent based.

By the term "solvent-based" it is meant comprising a solvent. The solvent of the present invention is non-aqueous. An aqueous solvent comprises water. A non-aqueous solvent comprises an organic solvent. By the term "organic solvent" it is meant a solvent, such as an alcohol, ether, ester, acetate and naphtha. In the present invention, an organic solvent is typically an organic solvent that is aggressive to a flexible packaging as it causes loss of integrity of said flexible packaging.

By the term "non-aqueous solvent" it is meant an organic solvent. Suitable organic solvents for a colourant composition are aromatic solvents, for instance, naphtha.

A paint colourant composition may further comprise a surfactant, a pigment dispersing agent, a biocide, an anti-settling agent.

The inventors found that flexible pouch integrity was particularly stressed if the pouch was filled by a paint colourant composition comprising a compound selected from a group comprising of an oxime, such as 2-butanone oxime, an alkyl polyglycol ether phosphate compound, an ethoxylated alkyl alcohol. The inventors realized that in spite of their useful properties these additives had negative side-effects on packaging integrity. Without being bound to theory, possibly these ingredients function as flex cracking agents.

Package integrity was affected by its content in the order of: pigment in powder form < pigment in water < pigment in naphtha < pigment in a solvent comprising a compound selected from the list of an 2-butanone oxime, an alkyl polyglycol ether phosphate compound, an ethoxylated alkyl alcohol.

By the term "oxime" it is meant a compound of general formula R¹R²C=N-OH, wherein R¹ and R² are hydrogen atoms or organic groups, preferably C1 to C8 alkyl groups, more preferably R¹ is ethyl and R² is methyl.

In an embodiment of the invention the oxime is preferably 2-butanone oxime. Synonyms for 2-butanone oxime are 2-butoxime, butanone oxime, ethyl-methylketonoxime, pentan-2-one oxime, butan-2-one oxime, ethyl methyl ketoxime MEK oxime. 2-butanone oxime acts as an antioxidant, radical scavenger, anti-skinning additive, peel-preventing additive. It acts as an antioxidant against oxidative drying materials which form a sticky skin with air oxygen. Addition of 2-butanone oxime to a paint colourant composition may transfer these properties to a paint, especially an alkyd paint, to which it is dosed.

In an embodiment of the invention, a use as previously described is provided wherein said paint colourant composition is a non-aqueous solvent based paint colourant preferably comprising an oxime, more preferably comprising 2-butanone oxime. 2-butanone oxime is known as anti-skinning agent.

In a preferred embodiment of the invention a use as previously described is provided wherein said paint colourant composition is a non-aqueous solvent based paint colourant preferably comprising between 0.1 weight% and 1.0 weight% 2-butanone oxime, more preferably between 0.1 weight% and 0.5 weight% 2-butanone oxime, most preferably between 0.1 weight% and 0.3 weight% 2-butanone oxime, as expressed by weight of the paint colourant composition.

A suitable solvent for carrying a paint colourant composition comprising 2-butanone oxime is for instance naphtha, preferably hydrotreated heavy naphtha. In an embodiment of the invention a pouch is provided as previously described wherein said paint colourant composition comprises hydrotreated heavy naphtha.

By the term hydrotreated heavy naphtha is meant hydrotreated light steam cracked naphtha. This is a hydrotreated heavy naphtha with a distillation temperature of 190 °C at 10% volume recovery and 204 °C at 90% recovery (CAS 64742-48-9). The selection of this naphtha is advantageous as solvent for the paint colourant composition as it is over 99% saturated, has a high chemical stability, high boiling point and low polarity.

In a preferred embodiment of the invention a pouch is provided as previously described wherein said paint colourant composition comprises between 10% and 40% by weight, preferably between 10% and 30% by weight, most preferably between 12 and 25% by weight naphtha. In another preferred embodiment of the invention, said naphtha is hydrotreated heavy naphtha.

In a preferred embodiment of the invention a pouch is provided as previously described wherein said paint colourant composition comprises between 10% and 40% by weight, preferably between 10% and 30% by weight, most preferably between 12 and 25% by weight hydrotreated heavy naphtha and further comprises preferably between 0.1 weight% and 1.0 weight% 2-butanone oxime, more preferably between 0.1 weight% and 0.5 weight% 2-butanone oxime, most preferably between 0.1 weight% and 0.3 weight% 2-butanone oxime.

A paint colourant composition may further comprise a surfactant. A surfactant may provide improved compatibility to ingredients present in a paint colourant formulation. Surfactants may provide improved wetting/dispersing of pigments. This in turn may lead to enhanced paint gloss.

Surfactants are key components for dispersion of pigments in water based colourant compositions. Typically 1 - 10% by weight of a surfactant is added to wet the pigment, resulting in a low viscosity paste with well dispersed pigment particles. The amount of surfactant needed is dependent on the particle size of the pigment, as known to the person skilled in the art. The following surfactants are applicable for both inorganic as well as organic pigments: betaine, carboxylate, sulfosuccinate, naphthalene sulfonate, phosphate ester, dodecylbenzene sulphonate, amide ethoxylate, alcohol ethoxylated, and nonyl phenol ethoxylate. For inorganic pigments, the phosphate esters are primarily recommended, since their negative charge is attracted to the positive charge often present on inorganic particles. Phosphate esters have additional benefits such as improved metal adhesion and corrosion control.

The present invention particularly relates to paint colourant compositions comprising an ethoxylated C6-C16 alkyl alcohol, preferably an ethoxylated C10-C14 alkyl alcohol, more preferably an ethoxylated C12-C14 alkyl alcohol, most preferably an ethoxylated oleylalcohol.

A paint colourant composition may further comprise an alkyl polyglycol ether phosphate. As an anionic surfactant, one of the main advantages of phosphate esters is their stability and solubility in alkali systems. They can be used as hydrotropes to couple nonionic surfactants into systems which are not soluble and at the same time increase wetting and detergency properties. The presence of the phosphate group imparts some interactions with metallic surfaces, thereby exhibiting some anti-corrosion and metal-adhesion characteristics. They can be used as additives in oil and water-soluble lubricant systems to improve lubricity and anti-frictional properties of the formula.

In an embodiment of the invention a use is provided as previously described wherein said paint colourant further comprises an alkyl polyglycol ether phosphate.

In a preferred embodiment of the invention a pouch is provided as previously described wherein said paint colourant further comprises between 2.5 weight% and 10.0 weight%, preferably between 3 weight% and 8 weight%, more preferably between 4 weight% and 6 weight%, most preferably around 5 weight% of an alkyl polyglycol ether phosphate.

In another embodiment of the invention a pouch is provided as previously described wherein said paint colourant further comprises an alkyl polyglycol ether phosphate and an ethoxylated C6-C16 alkyl alcohol.

In another preferred embodiment of the invention a pouch is provided as previously described wherein said paint colourant composition is a solvent based paint colourant composition comprising a compound selected from the group consisting of an oxime, an ethoxylated alkyl alcohol and alkyl polyglycol ether phosphate.

In a preferred embodiment of the invention a pouch is provided as previously described wherein said compound is selected from a group consisting of an oxime, an alkyl polyglycol ether phosphate and an ethoxylated C6-C16 alkyl alcohol.

In a preferred embodiment of the invention a pouch is provided as previously described wherein said compound is selected from a group consisting of an oxime, an alkyl polyglycol ether phosphate and an ethoxylated C6-C16 alkyl alcohol; and has a storage stability of preferably at least six months, more preferably at least twelve months, most preferably at least twenty four months.

In a preferred embodiment of the invention said spout has a plastic body provided with a channel (16) for dispensing said paint colourant composition from the spouted pouch and/or feeding a substance to the spouted pouch, and said body is provided with sealing surfaces (17, 18) on opposed sides, said sealing surfaces being adapted to be sealed to said polyethylene sealing layer of said laminated sheet material.

In a preferred embodiment of the invention, the above described spouted pouch is a pouch wherein said body part is arch-shaped on said opposed sites. The arch shape of both sides of the body part is favourable for neutralizing pressure exerted on the spout contour providing the spouted pouch resistance to cracking. Spouts are for instance sensitive to cracking at cold temperatures.

In a preferred embodiment of the invention, the above described spouted pouch is a pouch wherein said body has two elongated wings (20, 21) extending over a length thereof in diametrically opposed directions outward from the main body part, each wing having a height at right angles to its length, each wing having a solid cross-section, each wing having faces forming part of the sealing surfaces of the spout, and wherein each wing (20, 21) further has a length of at least 6 millimetres. The provision of wings on the spout is favourable for improving the seal strength of the spout to the pouch.

In a preferred embodiment of the invention, the above described spouted pouch is a pouch wherein said spout, is provided with a cap (5) removably connected to said spout and said cap is provided with a tamper evident seal. Use of a tamper evident seal is advantageous as it may be derived from an intact or broken seal if the packaging was opened. It is a visible tool to distinguish if a packaging has potentially been tampered with.

In a preferred embodiment of the invention, the above described spouted pouch is a pouch wherein said pouch is provided with means for standing up-right (22). Preferably said means are integral means. A spouted pouch provided with integral means for standing-up right, is advantageous for recyclability of the packaging. A one-piece packaging is easier to recycle than a two piece packaging.

In a preferred embodiment of the invention, said means for standing up-right (22) is a gusset. A pouch provided with gusset may be obtained from one or more laminated sheets. Preferably the gusseted pouch is manufactured from a single laminated sheet. Reduction of the number of sheets is advantageous for keeping seams in a packaging to a minimum.

In a preferred embodiment of the invention, said gusset is provided with fortification means (35) and/or suspension means (36).

A pouch provided with a gusset at the bottom of the pouch comprises next to a front wall and back wall, two inner walls. Sealing through this stack of walls at the bottom of the pouch results in the front wall of the pouch being sealed to a first inner wall of the gusset and a second inner wall of the gusset being sealed to the back wall of the pouch. The gusset thus forms a foot by means of which the pouch may stand up-right.

The present invention particularly relates to a gusset wherein the first inner wall and second inner wall of the gusset are connected with fortification means (35). Connection of the walls of the gusset at the bottom of the pouch results in less strain on the fold of the gusset (22) and seals at the bottom of the pouch. This provides the pouch more resistance to flex cracking. The fortification means are preferably provided at the bottom end of the first side edge and second edge, as displayed in Figure 2. Fortification means may also be provided just below the fold of the gusset (22), as represented by the rectangular fortification means (35) in Figure 2. In a preferred embodiment of the invention, said gusset is provided with fortification means (35).

Preferably the first seal in a pouch according to an embodiment of the invention has a cut-off triangular shape at the bottom. This shape is as depicted in Figure 2. Below the folding line of the gusset (22), a cut-off triangular shape is schematically represented. The angle alpha is preferably 45 degrees. This shape is advantageous for removal of the paint colourant composition from the pouch.

This shape further allows that suspension means (36) may be provided in the sealed area at the bottom. An example is displayed for instance in Figure 2. Circular or ellipse-shaped areas are provided which may be punched to obtain suspension means. The resulting holes may be used to hook up the pouch in a paint dispensing device. With the suspension means provided at the bottom of the pouch, the pouch will hang upside down with the spout (15) facing downwards. The pouch can be emptied by means of a gravitational force. In a preferred embodiment of the invention, said gusset is provided with suspension means (36).

In a preferred embodiment of the invention, said gusset is provided with fortification means (35) and suspension means (36).

In a further aspect, the present invention provides of a pouch (1) as packaging for a paint colourant composition, said paint colourant composition comprising at least 10 weight%, preferably at least 20 weight% colourant, more preferably at least 30 weight%, most preferably at least 40 weight% colourant. A water based colourant composition typically comprises between 1.6 and 66 weight% colourant. An organic solvent based colourant composition typically comprises between 4 and 58 weight% colourant.

In a preferred embodiment, the present invention provides a use as above described, wherein said paint colourant composition is a solvent based paint colourant composition comprising a compound selected from the group consisting of an oxime, an ethoxylated alkyl alcohol and alkyl polyglycol ether phosphate.

In a preferred embodiment, the present invention provides a use as above described, wherein said pouch is a pouch according to an embodiment of the present invention.

Use of pouch as provided by an embodiment of the invention is advantageous as it is provided with means for preventing flex cracking. This is particularly advantageous for use in a paint dispenser where dispensing of a paint colourant composition from a flexible packaging may cause the packaging to be flexed repeatedly. They can be folded up when empty, hence taking less space than canisters, such as for instance metal cans. This is advantageous on transportation costs. In a preferred embodiment, the present invention provides a use as above described in a paint dispensing device. Pouches of the invention are particularly useful for replacement of a paint colourant can used for refilling the paint dispenser.

In an embodiment of the invention the colourant composition is an organic solvent based composition comprising: between 12 and 25 weight% naphtha, between 4-58 weight% pigment, between 35-75 weight% alkyd resin. The alkyd resin is consisting of 90 weight% solids and 10 weight% solvent.

In a preferred embodiment of the invention the colourant composition is an organic solvent based composition comprising: between 12 and 25 weight% naphtha, between 4 and 58 weight% pigment, between 35-75 weight% alkyd resin, and between 0.1 and 1.0 weight% of 2-butanon oxime. The alkyd resin is consisting of 90 solid and 10 weight% solvent.

In a preferred embodiment of the invention the colourant composition is a water based composition comprising: between 1.6-66 weight% pigment, between 17 and 50 weight% water, between 2.5 and 10 weight% surfactant, preferably an ethoxylated oleylalcohol, and between 2.5-10 weight% alkyl polyglycol ether phosphate compound.

### EXAMPLES

The above aspects and embodiments are further supported by the following non-limiting examples as illustrated by Figures 1-4.

Referring to **Figures 1** **a** and **b,** an example of a preferred laminated sheet material is shown in cross-section which includes a first layer of polyethylene forming the inner face of the finished packaging. The first layer is generally a co-extruded polyethylene layer having a thickness of about 100 µm or 150 µm. An adhesive layer bonds the polyethylene layer to a polyamide layer having a thickness of about 15 µm. The adhesive, which is typically a polyurethane, is applied at coverage of about 3.0 g/ m². A second polyurethane adhesive layer is applied onto the polyamide layer at coverage of about 3.0 g/m² to bond the polyamide layer to a 8 or 9 micron aluminium foil. A polyurethane adhesive layer is applied over the aluminium foil layer at a coverage of about 3.0 g/ m², optionally followed by a print layer (Figure 1 b). The print layer having suitable colouring and indicia is applied having coverage of about 2.0 g/ m². A final outer top layer of a polyethylene terephthalate is applied over the print layer (Figure 1b) or over the third adhesive layer (Figure 1a). The polyethylene terephthalate layer generally has a thickness of about 12 µm.

The multilayered film of Figure 1 has a physical structure in terms of number of layers, layer thickness, and layer arrangement and orientation in the pouch, and a chemical composition in terms of various polymers, present in each of the layers, for example as set forth in Table 1 (Example 1) and Table 2 (Example 2) below.

**Examples 1 and 2:** four layered laminate film suitable for manufacturing a spouted spout according to an embodiment of the invention.

### Example 1

**Table 1: Example of a laminate structure for a pouch, according to an embodiment of the invention.**

| Layer order | Layer function | Chemical identity | Layer Thickness |
|---|---|---|---|
| 1/First | Sealing layer, layer in contact with paint colourant composition | Co-extruded polymer of ethylene (Coex-PE) | 150 µm |
| | Adhesive layer | 2K-Polyurethane adhesive | 3.0 g/ m² |
| 2/Second | Protective layer | Oriented Polyamide (OPA) | 15 µm |
| | Adhesive layer | 2K-Polyurethane adhesive | 3.0 g/ m² |
| 3/Third | Barrier layer | Aluminium film (Alu) | 9 µm |
| | Adhesive layer | 2K-Polyurethane adhesive | 3.0 g/ m² |
| 4/Fourth | Printable layer | Polyethylene Terephthalate (PET) | 12 |

### Example 2

**Table 2: Example of a laminate structure for a pouch, according to an embodiment of the invention.**

| Layer order | Layer function | Chemical identity | Layer Thickness |
|---|---|---|---|
| 1/First | Sealing layer, layer in contact with paint colourant composition | Co-extruded polymer of ethylene (Coex-PE) | 100 µm |
| | Adhesive layer | 2K-Polyurethane adhesive | 3.0 g/ m² |
| 2/Second | Protection layer | Oriented Polyamide (OPA) | 15 µm |
| | Adhesive layer | 2K-Polyurethane adhesive | 3.0 g/ m² |
| 3/Third | Barrier layer | Aluminium film (Alu) | 8 µm |
| | Adhesive layer | 2K-Polyurethane adhesive | 3.0 g/ m² |
| 4/Fourth | Printable layer | Polyethylene Terephthalate (PET) | 12 µm |

Referring to **Figure 2****,** an example of a preferred spouted pouch (6) is shown schematically. The preferred spouted pouch (6) is displayed in a 3-D view in Figure 3. The pouch (1) of the spouted pouch is formed by a front wall (27) and back wall (28) of a laminated foil (2). The front wall (27) and back wall (28) were joined at the first side edge (31), second side edge (32) and lower edge (30) by a first sealing operation. This first sealing operation provided a first seal with seal width w1 and a seal width w3. The spout (15) is positioned in the middle of the upper edge (29). A second sealing operation provided a second seal (26) with seal width w2. It sealed the inner surface of the front wall and back wall to the sealing surfaces (17, 18) of the spout (15). The pouch is provided with a gusset (22). The first side edge and second side edge were narrowed towards the bottom edge. The angle alpha was typically 45 degrees.

### Example 3-4: spouted pouch according to an embodiment of the invention.

The spouted pouch was manufactured wherein a sheet of laminate was used for forming the body and another sheet of laminate was used for forming a gusset. Hence the bottom is shaped in such a way that the pouch will be able to stand upright when the pouch is filled. Both sheets of laminate used were as illustrated by Figure 1. At the top centre of the pouch, the top seal portion was left open so as to leave an opening for the spout.

The spout was extruded using a high density polyethylene copolymer grade (HDPE) with a narrow molecular weight distribution. Rigidex 5050EA available from BP Solvay Polyethylene was used. The spout design used was as illustrated in Figures 4 a-f. The spout was heat-sealed in between two sealing surfaces provided by the laminate. A spouted pouch was obtained as illustrated by Figures 2 and 3.

**Table 3: Typical Physical Properties of Rigidex 5050EA which was found particularly suitable for use in an embodiment of the present invention.**

| Property | Value | Units | Test Method |
|---|---|---|---|
| Melt flow rate (2.16 kg load) | 4 | g/600s | ISO 1133-1997: Condition D |
| Density (annealed) | 950 | kg/m³ | ISO 1872/1-1993 |
| Tensile Strength at Yield | 24 | MPa | ISO 527-1976: Type 2 Speed D |
| Elongation at Break | 1000 | % | ISO 527-1976: Type 2 Speed D |
| Flexural Modulus | 900 | MPa | ISO 178-1997 |
| Impact Strength (Charpy) | 8 | KJ/m² | ISO 179-1982 |
| Hardness (Shore D) | 64 | - | ISO 868-1978: Type D |
| Melting Point | 130 | °C | ASTM D2117 |
| Vicat Softening Point (1 kg) | 121 | °C | ISO 306 (charge 1kg) |
| Thermal Conductivity | 0.48 | W/m² | ASTM C177 |
| Specific Heat | 2300 | J/Kg°C | |
| Coefficient of Linear Expansion | 2x10-4 | °C | ASTM D696-91 |

The dimensions of the pouch were as follows: external height 205 mm, external width 175 mm, gusset height 52 mm, gusset bottom seal width 8 mm, side seal width 8 mm and spot weld position 11 mm to centre from bottom edge. Variations on the dimensions are +/- 2 mm, except for the variation on the spot weld position which is +/- 4 mm. The corners of the pouch were rounded using a corner rounding machine and a R8 knife. The recipient formed has content for 1 litre of a colourant composition. It is designed to contain 2 kg of paint colourant.

A spouted pouch manufactured with a laminate as in example 1 and 2 had the characteristics as displayed in Table 4.

**Table 4**

| Characteristics | Example 3 | Example 4 | Standard |
|---|---|---|---|
| Residual solvents | | < 20 g/m² | |
| Tensile-Seal strength (all seals) | > 45 N/15 mm (300 mm/min) | > 40 N/15 mm (300 mm/min) | ANSI 88-00 |
| Bond strength | | | |
| PET/Alu | > 2.5 N/15 mm | > 3 N/15 mm | |
| Alu/PA | > 3 N/15 mm | > 3 N/15 mm | |
| PA/PE | > 4 N/15 mm | > 5 N/15 mm | |
| Inflation test (after insertion of spout) | > 0.5 bar, 30 s | > 0.5 bar | Pouch inflated to burst, min. acceptable pressure at burst |
| Plate burst test (compression test) | > 0.7 bar | | AINSI F1140-00 |
| Drop test | Pass | | Drop from a height of 0.9 metres (table height) on 6 faces of the pouch/1 drop per pouch side |
| Leaker test | Pass | Pass | |
| Visual check | Pass | Pass | |

An example of a spouted stand-up pouch (6) according to an embodiment of the invention is illustrated by **Figure 3****.** The spout depicted in Figure 3 is provided with a re-closable cap (5) and a tamper-evident seal (23). The outer body of the spout is arch-shaped on opposite sides (17, 18).

### Example 5: Spout suitable for providing a spout for use according to an embodiment of the invention.

Referring to Figure 4, a preferred spout for obtaining the spouted pouch of the invention is schematically represented. The plastic body of the spout has sealing surfaces (17, 18) on opposed sides sealable to a compatible polyethylene sealing layer of the laminated sheet material of a pouch. Said body is arch-shaped on opposing sides (17, 18) of the body and is provided with elongated wings (20, 21). The arches form an opening (19). The body part extending from the sealing surfaces and facing away from the pouch (34), is provided with a screw-thread (24) designed to mate with a compatible screw-thread on a cap (5).

Examples of paint colourant compositions for use according to an embodiment of the invention are provided by Examples 6-7 (organic solvent based). Examples 8-9 (water based) do not form part of the present invention.

### Example 6

A solvent based blue colourant with the following composition: 2-butanone oxime at a concentration of between 0.1 % to 1.0 % by weight of the colourant composition, hydrotreated heavy naphtha (petroleum, CAS 6472-48-9) of between 20.0 % and 25.0 % by weight of the colourant composition, an alkyd resin of between 35-75 % by weight of the colourant composition and the remainder a blue pigment. The alkyd resin consists of 90% solids and 10% solvent. This solvent comprises a second amount of hydrotreated heavy naphtha (petroleum, CAS 6472-48-9) of between 2.5 % and 10.0 % by weight of the colourant composition. The colourant composition is in the form of a blue paste. It has a density of 1.01 g/cm3 at 20 °C, a dynamic viscosity of 1,150 mPa.s at 23 °C and a flow time equal to or above 60 s as measured according to method ISO 2431 (EN 535) 6mm cup, transversal section: 6mm.

### Example 7

A solvent based white colourant with the following composition: 2-butanone oxime at a concentration of between 0.1 % to 1.0 % by weight of the colourant composition, hydrotreated heavy naphtha (petroleum, CAS 6472-48-9) of between 20.0 % and 25.0 % by weight of the colourant composition, an alkyd resin consisting of 90% solid and 10% solvent, in particular comprising hydrotreated heavy naphtha (petroleum, CAS 6472-48-9) of between 2.5 % and 10.0 % by weight of the colourant composition and the remainder a white pigment. The colourant composition is in the form of a white paste. It has a density of 1.01 g/cm3 at 20 °C, a dynamic viscosity of 1150 mPa.s at 23 °C and a flow time equal to or above 60 s as measured according to method ISO 2431 (EN 535) 6mm cup, transversal section: 6mm.

### Example 8

A water based white colourant with the following composition: alkyl polyglycol ether phosphate compound (CAS 164383-18-0) at a concentration of between 2.5 % to 10.0 % by weight of the colourant composition, ethoxylated oleylalcohol (CAS 9004-98-2) of between 10.0 % and 20.0 % by weight of the colourant composition and the remainder a white pigment. The colourant composition is in the form of a liquid. It has a density of 1.19 g/cm3 at 20 °C, pH 8-9, a dynamic viscosity of 300 mPa.s at 23 °C and a flow time equal to or above 40 s as measured according to method ISO 2431 (EN 535) 6mm cup, transversal section: 6mm.

### Example 9

A water based blue colourant with the following composition: alkyl polyglycol ether phosphate compound (CAS 164383-18-0) at a concentration of between 2.5 % to 10.0 % by weight of the colourant composition, ethoxylated oleylalcohol (CAS 9004-98-2) of between 10.0 % and 20.0 % by weight of the colourant composition and the remainder a blue pigment. The colourant composition is in the form of a liquid. It has a density of 1.19 g/cm3 at 20 °C, pH 8-9, a dynamic viscosity of 300 mPa.s at 23 °C and a flow time equal to or above 40 s as measured according to method ISO 2431 (EN 535) 6mm cup, transversal section: 6mm.

### Example 10

Table 5 represent results from lab tests comparing different packaging solutions for paint colourant. From the results represented in Table 5 it is clear that between 4 and 8% of paint colourant composition remains when cans are used as recipient, versus between 1 and 2% when a pouch according to an embodiment of the invention is used. Other packaging, such as metal cans with a peelable metal lid and plastic bottles (PET) showed results which were intermediate between the packaging currently in use, namely metal cans, and a pouch according to an embodiment of the invention.

The environmental impact of cans may be reduced. The amount of unused colourants that end up in the waste stream was reduced by 70%.

The pouch generates less waste after usage. The pouch weighs less and is less bulky. The pouch has a lower carbon footprint than other forms of packaging suitable for shipping colourants, such as metal cans.

**Table 5: colourant residue remaining in emptied packaging**

| 1 Litre packaging | Scenario 1 | Scenario 2 | Scenario 3 | Scenario 4 |
|---|---|---|---|---|
| Metal can | 8% | 6% | 3% | 2.5% |
| Metal can with peelable metal lid | 6% | 5% | 2.5% | 2% |
| PET bottle | 5% | 4% | 3% | 2.5% |
| Pouch | 2% | 1.5% | 1.5% | 1% |

| 2.5 Litre packaging | Scenario 1 | Scenario 2 | Scenario 3 | Scenario 4 |
|---|---|---|---|---|
| Metal can | 6% | 4% | 2.5% | 2% |
| Pouch | 1.5% | 1.25% | 1% | 0.75% |

### Example 11: Storage stability and package integrity testing - 6 weeks

A number of pouches were filled with either solvent based (SB) or water based (WB) paint colourant composition. As a control several tin cans, as traditionally used for paint colourants, were filled with either solvent based (SB) or water based (WB) paint colourant composition. Empty and filled pouches were weighed. The pouches were stored over a period of 6 weeks at 60 °C.

The weight was determined at regular intervals. Over this period of time they showed no weight loss. At regular intervals over the 6 week period, tinting strength and viscosity of the colourant composition were measured. Tinting strength of the colourant composition and viscosity were not affected. They showed behaved comparable to colourant composition stored in traditional tin cans, with regards to tinting and flow behaviour.

The integrity of the pouches was tested at regular intervals over the 6 week period. Pouches showed no delamination or increase in the number of pinholes. The pouches did not leak.

### Example 12: Storage stability and package integrity testing - 26 weeks

A number of pouches were filled with either solvent based (SB) or water based (WB) paint colourant composition. As a control several tin cans, as traditionally used for paint colourants, were filled with either solvent based (SB) or water based (WB) paint colourant composition. Empty and filled pouches were weighed. The pouches were stored over a period of 26 weeks at 40 °C.

The weight was determined at regular intervals. Over this period of time they showed no weight loss. At regular intervals over the 26 week period, tinting strength and viscosity of the colourant composition were measured. Tinting strength of the colourant composition and viscosity were not affected. They showed behaved comparable to colourant composition stored in traditional tin cans, with regards to tinting and flow behaviour.

The integrity of the pouches was tested at regular intervals over the 26 week period.

Pouches showed no delamination or increase in the number of pinholes. The pouches did not leak.

### Example 13

A pouch according to an embodiment of the invention invites for active emptying, squeezing it out and rolling it, like an almost empty toothpaste packaging. A total scrape out of a can as known in the art is tedious, hence in practice often omitted. A pouch according to an embodiment of the invention may be emptied quickly and leave less paint colourant composition behind.

### REFERENCE LIST

- 1.: flexible pouch
- 2.: a flexible laminated sheet material
- 3.: a recipient
- 4.: re-closable means
- 5.: cap
- 6.: spouted pouch
- 7.: polyethylene sealing layer
- 8.: first adhesive layer
- 9.: oriented polyamide layer
- 10.: second adhesive layer
- 11.: barrier layer of aluminium foil
- 12.: third adhesive layer
- 13.: polyethylene terephthalate layer
- 14.: ink layer
- 15.: spout
- 16.: channel
- 17.: sealing surface
- 18.: sealing surface
- 19.: double arch shaped opening
- 20.: elongated wing
- 21.: elongated wing
- 22.: means for standing up-right
- 23.: tamper evident seal
- 24.: screw thread
- 25.: first seal
- 26.: second seal (top seal)
- 27.: front wall
- 28.: back wall
- 29.: upper edge
- 30.: lower edge
- 31.: first side edge
- 32.: second side edge
- 33.: round edged corner
- 34.: dispensing means
- 35.: fortification means
- 36.: suspension means
- w1: width of first seal
- w2: width of second seal
- w3: width of bottom seal
- alpha: angle

## Claims

1. Pouch (6) comprising a body formed of a laminated sheet comprising at least three layers, said pouch containing a paint colourant composition, wherein said composition comprises a non-aqueous solvent,
said laminated sheet comprising:
1) a polyethylene sealing layer (7),
2) an oriented polyamide layer (9), bonded to said polyethylene sealing layer (7) by means of an adhesive,
3) optionally a barrier layer of aluminium (11), bonded to said oriented polyamide layer by means of an adhesive,
4) a polyethylene terephthalate layer (13) bonded to said barrier layer of aluminium if present, or to said oriented polyamide layer (9), by means of an adhesive;
optionally an ink layer (14) provided between said polyethylene terephthalate layer and said barrier layer of aluminium;
and a spout (15);
said spout comprising sealing surfaces adopted to be sealed to said polyethylene sealing layer of said laminated sheet to form a spouted pouch for the containment of said paint colourant composition,
said sealing surfaces comprising high density polyethylene (HDPE) and/or said adhesive being a polyurethane adhesive.

2. Pouch (6) according to claim 1, **characterized in that**, said high density polyethylene has a density of at least 945 kg/m³.

3. Pouch according to claim 1 or 2, wherein
said oriented polyamide layer (9) bonded to said polyethylene sealing layer (7) has a bond strength of at least 2.5 N/15 mm, and
said barrier layer of aluminium (11) bonded to said oriented polyamide layer has a bond strength of at least at least 3.0 N/15mm, and
said polyethylene terephthalate layer (13) bonded to said barrier layer of aluminium has a bond strength of at least at least 4.0 N/15mm.

4. Pouch according to any of claims 1 to 3, wherein
the thickness of said polyethylene sealing layer is between 90 to 160 µm,
the thickness of said oriented polyamide layer is between 10 to 20 µm,
the thickness of said barrier layer of aluminium is between 8 to 10 µm, and
the thickness of said polyethylene terephthalate layer is between 10 to 14 µm.

5. Pouch according to any of claims 1 to 4 wherein said spout is provided with an opening (16) allowing at least 95% by weight of said paint colourant composition to be removed from said pouch in a time frame of at most 3 minutes.

6. Pouch according to any of claims 1 to 5, wherein said pouch is provided with a gusset (22) and said gusset (22) is provided with fortification means (35) and/or suspension means (36).

7. Pouch according to any of claims 1 to 6, wherein said paint colourant composition, comprises at least 4% by weight, preferable at least 10% by weight, preferably at least 20% by weight of a colourant component.

8. Pouch according to any of claims 1 to 7, wherein said paint colorant composition comprises a compound selected from the group consisting of an oxime, an ethoxylated alkyl alcohol and alkyl polyglycol ether phosphate.

9. Pouch according to any of claims 1 to 8, wherein said paint colourant composition, comprises between 10% and 40% by weight naphtha, preferably between 10% and 30% by weight, most preferably between 12 and 25% by weight naphtha.

10. Use of a pouch according to any of claims 1 to 9 as packaging for a paint colourant composition comprising a non-aqueous solvent.

11. Use according to claim 10, wherein said paint colourant composition comprises at least 4% by weight, preferably at least 10% by weight, preferably at least 20% by weight of a colourant component.

12. Use according to claim 10 or 11, wherein said paint colourant composition comprises a compound selected from the group consisting of an oxime, an ethoxylated alkyl alcohol and alkyl polyglycol ether phosphate.

13. Use according to any of claims 10 to 12, wherein said paint colourant composition comprises between 10% and 40% by weight naphtha, preferably between 10% and 30% by weight, most preferably between 12 and 25% by weight naphtha.

14. Use according to any of claims 10 to 13 in a paint dispensing device.

## Patentansprüche

1. Beutel (6), der einen Körper umfasst, der aus einer Laminatfolie gebildet ist, die mindestens drei Schichten umfasst, wobei der Beutel eine Farbmittelzusammensetzung für Anstrichstoffe enthält, wobei die Zusammensetzung ein nichtwässriges Lösungsmittel umfasst,
wobei die Laminatfolie Folgendes umfasst:
1) eine Polyethylen-Abdichtungsschicht (7),
2) eine orientierte Polyamidschicht(9), die mit Hilfe eines Klebstoffs mit der Polyethylen-Abdichtungsschicht (7) verklebt ist,
3) gegebenenfalls eine Barriereschicht aus Aluminium (11), die mit Hilfe eines Klebstoffs mit der orientierten Polyamidschicht verklebt ist,
4) eine Polyethylenterephthalat-Schicht (13), die mit Hilfe eines Klebstoffs mit der Barriereschicht aus Aluminium, falls vorhanden, oder mit der orientierten Polyamidschicht (9) verklebt ist;
gegebenenfalls eine Druckfarbenschicht (14), die zwischen der Polyethylenterephthalat-Schicht und der Barriereschicht aus Aluminium angeordnet ist;
sowie einen Ausgießer (15);
wobei der Ausgießer Dichtflächen umfasst, die so ausgelegt sind, dass sie an der Polyethylen-Abdichtungsschicht der Laminatfolie abgedichtet sind, damit ein Beutel mit Ausgießer zum Aufnehmen der Farbmittelzusammensetzung für Anstrichstoffe gebildet wird,
wobei die Dichtflächen Polyethylen hoher Dichte (HDPE) umfassen und/oder der Klebstoff ein Polyurethanklebstoff ist.

2. Beutel (6) nach Anspruch 1, **dadurch gekennzeichnet, dass** das Polyethylen hoher Dichte eine Dichte von mindestens 945 kg/m³ aufweist.

3. Beutel nach Anspruch 1 oder 2, wobei
die orientierte Polyamidschicht (9), die mit der Polyethylen-Abdichtungsschicht (7) verklebt ist, eine Haftfestigkeit von mindestens 2,5 N/15 mm aufweist, und
die Barriereschicht aus Aluminium (11), die mit der orientierten Polyamidschicht verklebt ist, eine Haftfestigkeit von mindestens mindestens 3,0 N/15 mm aufweist, und
die Polyethylenterephthalat-Schicht (13), die mit der Barriereschicht aus Aluminium verklebt ist, eine Haftfestigkeit von mindestens mindestens 4,0 N/15 mm aufweist.

4. Beutel nach einem der Ansprüche 1 bis 3, wobei
die Dicke der Polyethylen-Abdichtungsschicht zwischen 90 und 160 µm liegt,
die Dicke der orientierten Polyamidschicht zwischen 10 und 20 µm leigt,
die Dicke der Barriereschicht aus Aluminium zwischen 8 und 10 µm leigt, und
die Dicke der Polyethylenterephthalat-Schicht zwischen 10 und 14 µm leigt.

5. Beutel nach einem der Ansprüche 1 bis 4, wobei der Ausgießer mit einer Öffnung (16) versehen ist, die es ermöglicht, dass mindestens 95 Gew.-% der Farbmittelzusammensetzung für Anstrichstoffe in einem Zeitrahmen von höchstens 3 Minuten aus dem Beutel entnommen werden.

6. Beutel nach einem der Ansprüche 1 bis 5, wobei der Beutel mit einer Seitenfalte (22) versehen ist und die Seitenfalte (22) mit Verstärkungsmitteln (35) und/oder Aufhängungsmitteln (36) versehen ist.

7. Beutel nach einem der Ansprüche 1 bis 6, wobei die Farbmittelzusammensetzung für Anstrichstoffe mindestens 4 Gewichts-%, vorzugsweise mindestens 10 Gewichts-%, vorzugsweise mindestens 20 Gewichts-% einer Farbmittelkomponente umfasst.

8. Beutel nach einem der Ansprüche 1 bis 7, wobei die Farbmittelzusammensetzung für Anstrichstoffe eine Verbindung umfasst, die aus der Gruppe ausgewählt ist, die aus einem Oxim, einem ethoxylierten Alkylalkohol und Alkylpolyglykoletherphosphat besteht.

9. Beutel nach einem der Ansprüche 1 bis 8, wobei die Farbstoffzusammensetzung zwischen 10 Gewichts-% und 40 Gewichts-% Naphtha, vorzugsweise zwischen 10 Gewichts-% und 30 Gewichts-%, am meisten bevorzugt zwischen 12 Gewichts-% und 25 Gewichts-% Naphtha umfasst.

10. Verwendung eines Beutels nach einem der Ansprüche 1 bis 9 als Verpackung für eine Farbmittelzusammensetzung für Anstrichstoffe, die ein nichtwässriges Lösungsmittel umfasst.

11. Verwendung nach Anspruch 10, wobei die Farbmittelzusammensetzung für Anstrichstoffe mindestens 4 Gewichts-%, vorzugsweise mindestens 10 Gewichts-%, vorzugsweise mindestens 20 Gewichts-% einer Farbmittelkomponente umfasst.

12. Verwendung nach Anspruch 10 oder 11, wobei die Farbmittelzusammensetzung für Anstrichstoffe eine Verbindung umfasst, die aus der Gruppe ausgewählt ist, die aus einem Oxim, einem ethoxylierten Alkylalkohol und Alkylpolyglykoletherphosphat besteht.

13. Verwendung nach einem der Ansprüche 10 bis 12, wobei die Farbmittelzusammensetzung für Anstrichstoffe zwischen 10 Gewichts-% und 40 Gewichts-% Naphtha, vorzugsweise zwischen 10 Gewichts-% und 30 Gewichts-%, am meisten bevorzugt zwischen 12 Gewichts-% und 25 Gewichts-% Naphtha umfasst.

14. Verwendung nach einem der Ansprüche 10 bis 13 in einer Anstrichstoff-Abgabevorrichtung.

## Revendications

1. Poche (6) comprenant un corps constitué d'une feuille stratifiée comprenant au moins trois couches, ladite poche contenant une composition de colorant pour peinture, ladite composition comprenant un solvant non aqueux,
ladite feuille stratifiée comprenant :
1) une couche d'étanchéité en polyéthylène (7),
2) une couche de polyamide orienté (9), collée à ladite couche d'étanchéité en polyéthylène (7) au moyen d'un adhésif,
3) éventuellement une couche barrière en aluminium (11), collée à ladite couche de polyamide orienté au moyen d'un adhésif,
4) une couche de téréphtalate de polyéthylène (13) collée à ladite couche barrière en aluminium si elle est présente, ou à ladite couche de polyamide orienté (9), au moyen d'un adhésif ;
éventuellement une couche d'encre (14) disposée entre ladite couche de téréphtalate de polyéthylène et ladite couche barrière en aluminium ;
et un bec (15) ;
ledit bec comprenant des surfaces d'étanchéité adaptées pour être scellées à ladite couche d'étanchéité en polyéthylène de ladite feuille stratifiée pour former une poche à bec pour le confinement de ladite composition de colorant pour peinture,
lesdites surfaces d'étanchéité comprenant du polyéthylène haute densité (HDPE) et/ou ledit adhésif étant un adhésif au polyuréthane.

2. Poche (6) selon la revendication 1, **caractérisée en ce que** ledit polyéthylène haute densité à une masse volumique d'au moins 945 kg/m³.

3. Poche selon la revendication 1 ou 2, dans laquelle
ladite couche de polyamide orienté (9) collée à ladite couche d'étanchéité en polyéthylène (7) a une résistance d'adhésion d'au moins 2,5 N/15 mm, et
ladite couche barrière en aluminium (11) collée à ladite couche de polyamide orienté a une résistance d'adhésion d'au moins 3,0 N/15 mm, et
ladite couche de téréphtalate de polyéthylène (13) collée à ladite couche barrière en aluminium a une résistance d'adhésion d'au moins 4,0 N/15 mm.

4. Poche selon l'une quelconque des revendications 1 à 3, dans laquelle
l'épaisseur de ladite couche d'étanchéité en polyéthylène se situe entre 90 et 160 µm,
l'épaisseur de ladite couche de polyamide orienté se situe entre 10 et 20 µm,
l'épaisseur de ladite couche barrière en aluminium se situe entre 8 et 10 µm, et
l'épaisseur de ladite couche de téréphtalate de polyéthylène se situe entre 10 et 14 µm.

5. Poche selon l'une quelconque des revendications 1 à 4 dans laquelle ledit bec est pourvu d'une ouverture (16) permettant de retirer au moins 95 % en poids de ladite composition de colorant pour peinture dudit sachet en un laps de temps de 3 minutes maximum.

6. Poche selon l'une quelconque des revendications 1 à 5, ladite poche étant pourvue d'un soufflet (22) et ledit soufflet (22) étant pourvu de moyens de fortification (35) et/ou de moyens de suspension (36).

7. Poche selon l'une quelconque des revendications 1 à 6, dans laquelle ladite composition de colorant pour peinture comprend au moins 4 % en poids, de préférence au moins 10 % en poids, de préférence au moins 20 % en poids d'un composant colorant.

8. Poche selon l'une quelconque des revendications 1 à 7, dans laquelle ladite composition de colorant pour peinture comprend un composé choisi dans le groupe constitué par une oxime, un alcool alkylique éthoxylé et un phosphate d'éther d'alkylpolyglycol.

9. Poche selon l'une quelconque des revendications 1 à 8, dans laquelle ladite composition de colorant pour peinture comprend entre 10 % et 40 % en poids de naphta, de préférence entre 10 % et 30 % en poids, plus préférablement entre 12 et 25 % en poids de naphta.

10. Utilisation d'une poche selon l'une quelconque des revendications 1 à 9 comme emballage pour une composition de colorant pour peinture comprenant un solvant non aqueux.

11. Utilisation selon la revendication 10, dans laquelle ladite composition de colorant pour peinture comprend au moins 4 % en poids, de préférence au moins 10 % en poids, de préférence au moins 20 % en poids d'un composant colorant.

12. Utilisation selon la revendication 10 ou 11, dans laquelle ladite composition de colorant pour peinture comprend un composé choisi dans le groupe constitué par une oxime, un alcool alkylique éthoxylé et un phosphate d'éther d'alkylpolyglycol.

13. Utilisation selon l'une quelconque des revendications 10 à 12, dans laquelle ladite composition de colorant pour peinture comprend entre 10 % et 40 % en poids de naphta, de préférence entre 10 % et 30 % en poids, plus préférablement entre 12 et 25 % en poids de naphta.

14. Utilisation selon l'une quelconque des revendications 10 à 13 dans un dispositif de
